# EUROPEAN PATENT SPECIFICATION

(11) **EP 1 775 900 B1**
(45) Date of publication and mention of the grant of the patent: **21.07.2010**
(21) Application number: 06121993.7
(22) Date of filing: 09.10.2006
(51) Int. Cl.: H04L 12/66

(54) **ISDN data transmission method and system through an IP bearer connection**
Verfahren und System zur ISDN-Datenübertragung über eine IP-Träger-Verbindung
Méthode et système pour la transmission de données RNIS par un raccordement de porteur IP

(30) Priority: 14.10.2005 CN 200510100405
(43) Date of publication of application: 18.04.2007
(73) Proprietor: Huawei Technologies Co., Ltd., Longgang District, Shenzhen Guangdong 518129 (CN)
(72) Inventor: Xiao, Futao Huawei Admin. Bld., 518129, Guangdong Province (CN)
(74) Representative: Reinhard - Skuhra - Weise & Partner GbR

(56) References cited:
- WO-A-2004/110064
- US-A1- 2005 195 741
- KANKKUNEN INTEGRAL ACCESS G ASH AT&T J HOPKINS FUJITSU B ROSEN MARCONI D STACEY NORTEL NETWORKS A YELUNDUR NEC L BERGER LABN CONSU: "Voice over MPLS Framework" IETF STANDARD-WORKING-DRAFT, INTERNET ENGINEERING TASK FORCE, IETF, CH, 1 January 1900 (1900-01-01), XP015030725 ISSN: 0000-0004
- "Post-selection delay in PSTN/ISDN using Internet telephony for a portion of the connection" ITU-T STANDARD IN FORCE (I), INTERNATIONAL TELECOMMUNICATION UNION, GENEVA,, CH, no. E671 3/, 1 March 2000 (2000-03-01), XP017400430

## Description

### Field of the Invention

The present invention relates to the data communication field, and particularly to a method and system for data transmission through an IP network in the Next Generation Network.

### Background of the Invention

The NGN (Next Generation Network) is a public telecommunication network built based on IP technologies, and can accommodate various forms of information. It can implement transmission and management of audio, video and data signals over a platform under a uniform administration and provide various wideband applications and conventional telecommunications services. Thus, it is an integrated-service network that indeed implements an integration of wideband and narrowband, an integration of wired and wireless, an integration of active and passive and an integration of transmission and access.

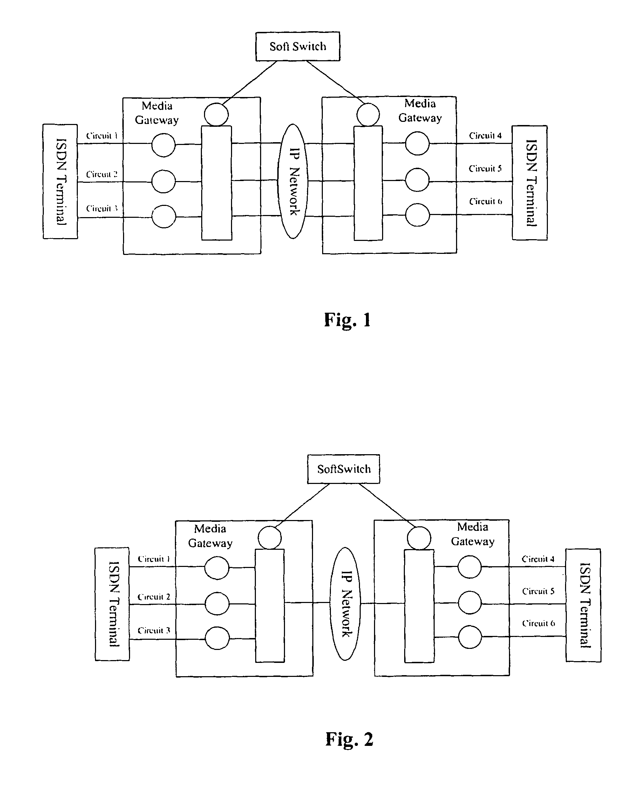

The NGN supports the access to and the applications of the ISDN (Integrated Services Digital Network). As shown in Fig. 1, there are is a plurality of telephone numbers between ISDN terminals, and each telephone number corresponds to one or two 64K circuits, with an implementation of a video communication at various rates and with a bandwidth of 128k to 2M or above. The ISDN terminals have an access to media gateways connected through an IP network. An IP connection is established for each circuit under the control of a soft switch, and data packets of each calling circuit are transmitted transparently to a corresponding called circuit through a corresponding IP connection. A format of the data packets is an H.221 message packet. Details related to the H.221 protocol can be found in the LC-Text: Recommendation H.221 "Frame Structure for a 64 to 1920 Kbit/s Channel in Audiovisual Teleservices", descriptions of which are omitted herein.

In this access mode, a plurality of IP links may run different routes due to a relatively-long delay of the IP network, and thus data over the plurality of IP links reach an opposite end at different times, which results in a failure of data aggregation at an opposite-end circuit and affects a normal communication. Furthermore in a case where the network communication quality is unreliable, if a certain link has a serious packet loss rate, then the data aggregation of another link may be affected and data packets thereof may be lost.

US2005195741 discloses that an architecture for quality-of-service (QoS) management creates a logical circuit-switched network within a packet network to support QoS-sensitive demands levied on the network. This QoS-managed network can serve to interwork, e.g., a PSTN with VolP networks. The architecture can Include a connection resource manager (CRM), which oversees bandwidth availability and demand admission/rejection on dynamically provisioned virtual trunk groups (VTGs) within the packet network, and a transport bandwidth controller (TBC). The VTGs serve to transport QoS-sensitive demands across the packet network. The TBC serves the CRM by providing an interface to routers and/or OAM systems of the packet network to size VTGs to meet QoS requirements. Media switches located at the packet network borders serve to mux/demux the demands into/from VTGs. CRMs and TBCs can be implemented as centralized, distributed, or hierarchical, and flat and aggregated variants of the architecture are supported. VTGs can be implemented using MPLS LSPs, VPNs, or source-based routing.

### Summary of the Invention

An object of the present invention is to solve a problem of asynchronous ISDN data and an effect on the communication quality due to inconsistencies of a plurality of IP link routes during a transmission of the data.

An embodiment provides a data transmission method for transmitting data through an IP link route between a calling media gateway and a called media gateway. The method includes: A. the calling media gateway receiving message packets in H.221 format transmitted by a calling ISDN terminal through a plurality of calling circuits, and converting the message packets into data packets suitable for being transmitted through a single IP link route by adding circuit tags indicative of a calling circuit to which each message packet belongs to the message packets from the different calling circuits, B. the calling media gateway transmitting the data packets to the called media gateway through the single IP link route; and C. the called media gateway analyzing the data packets to obtain the circuit tags, and transmitting the data packets to the called ISDN terminal through the plurality of called circuits corresponding to the respective calling circuits according to the circuit tags in the data packets.

Another embodiment provides a data transmission system including a calling media gateway and a called media gateway with data transmitted therebetween through an IP link route. The calling media gateway is adapted to receive message packets in H.221 format transmitted by a calling ISDN terminal through a plurality of calling circuits, convert the message packets into data packets suitable for being transmitted through a single IP link route by adding circuit tags indicative of a calling circuit to which each message packet belongs to the message packets from the different calling circuits, and transmit the data packets to the called media gateway through the single IP link route; and the called media gateway is adapted to analyze the data packets to obtain the circuit tags, and transmit the data packets to the called ISDN terminal through the plurality of called circuits corresponding to the respective calling circuits according to the circuit tags In the data packets.

Another embodiment provides a media gateway for transmitting data through an IP link route to another media gateway. The media gateway includes a first receiving means adapted to receive message packets in H.221 format transmitted by a calling ISDN terminal through a plurality of calling circuits; a first converting means adapted to convert the message packets into data packets suitable for being transmitted through a single IP link route by adding circuit tags indicative of a calling circuit to which each message packet belongs to the message packets from the different calling circuits; and a first transmitting means adapted to transmit the data packets to another media gateway through the single IP link route.

Another embodiment provides a media gateway for receiving data through an IP link route from another media gateway. The media gateway includes a converting means adapted to analyze data packets received through a single IP link route to obtain circuit tags contained in the data packets; and a transmitting means adapted to transmit the data packets to the called ISDN terminal through the plurality of called circuits corresponding to the respective calling circuits according to the circuit tags in the data packets.

According to the embodiments of the present invention, there is only one IPlink between the two media gateway, and the delay is fixed when data of a plurality of links are passed across an IP network, and therefore it is possible for a multi-link ISDN call to avoid a data asynchrony due to inconsistencies of a plurality of IP link routes.

### Brief Descriptions of the Drawings

Fig. 1 is an implementation principle diagram of transmitting data through an IPnetwork in the prior art; and

Fig. 2 is an implementation principle diagram of transmitting data through an IP network according to an embodiment of the present invention.

### Detailed Descriptions of the Embodiments

Hereinafter, objects, aspects and advantages of the present invention will become more apparent from the following descriptions of preferred embodiments of the present invention with reference to the drawings. However, it shall be appreciated that the embodiments described here are merely illustrations of the present invention without any restriction to the present invention.

According to an embodiment of the present invention, there may be only one IP link used to transmit data between a calling media gateway transmits data and a called media gateway regardless of whatever bandwidth used for a calling ISDN terminal to make a call. Thus, it is possible to avoid a data aggregation failure of a called ISDN terminal and hence an effect on a normal communication due to inconsistent IProutes in the case of a plurality of IP links used for data transmission.

As shown in Fig. 2, according to an embodiment of the present invention, a calling media gateway receives H.221 message packets transmitted by a calling ISDN terminal through a plurality of circuits, and then terminates an H.221 protocol process. It parses the H.221 message packets transmitted from the respective circuits, obtains audio and video streams from the packets through searches for frame heads, and in turn transmits the streams to a called media gateway through a single IP link. Upon receipt of the audio and video streams transmitted by the calling media gateway, the called media gateway reencapsulates them into H.221 frames and transmits re-encapsulated H.221 message packets to the called ISDN terminal though a plurality of circuits.

According to another embodiment of the present invention, the calling media gateway doesn't parse the H.221 message packets transmitted by the calling ISDN terminal through the plurality of circuits, and instead, adds respective circuit tags to the H.221 message packets received from the different circuits. Particularly, a tag indicates a calling circuit to which each message packet belongs, for example, an H.221 message packet received from a circuit 1 is provided with a circuit tag 1 at the front, an H.221 message packet received from a circuit 2 is provided with a circuit tag 2 at the front, etc. Then, the calling media gateway transmits the circuit-tagged H.221 message packets to the called media gateway through one IP link. Upon receipt of the H.221 message packets transmitted from the calling media gateway, the called media gateway analyzes the circuit tags in the message packets, and sends the message packets to one of the called circuits corresponding to the respective circuit tags. For example, the message packets with the tag 1 are transmitted to the called ISDN terminal through a circuit 4. According to the embodiment, the media gateway requires no processing of any specific protocol and merely functions as a relay, which can reduce the complexity of the media gateway.

For an increase in the data transmission reliability, a backup IP link can be provided for each call between the media gateways according to an embodiment of the present invention. The calling media gateway checks a status of the primary IP link periodically, and may transmit the packets to the called media gateway through the backup IP link when the primary IP link route is found unavailable.

According to the embodiments of the present invention, only one IP link is used to transmit data between the calling media gateway and the called media gateway, and therefore the delay is fixed when the data transmitted from the plurality of links are passed across the IP network, and it is possible to avoid a data asynchrony due to inconsistencies of a plurality of IP link routes.

Although the present invention has been described in connection with the preferred embodiments thereof, it shall be appreciated that the present invention is not limited to the embodiments and that various equivalent changes can be made thereto with reference to the description and the drawings without a departure from the scope of the present invention as defined by the accompanied claims.

## Claims

1. A data transmission method for transmitting data through an IP link route between a calling media gateway and a called media gateway, wherein the method comprises the steps of:
A. the calling media gateway receiving message packets in H.221 format transmitted by a calling ISDN terminal through a plurality of calling circuits (1, 2, 3), and converting the message packets into data packets suitable for being transmitted through a single IP link route by adding circuit tags indicative of a calling circuit to which each message packet belongs to the message packets from the different calling circuits (1, 2, 3);
B. the calling media gateway transmitting the data packets containing the circuit tags to the called media gateway through the single IP link route; and
C. the called media gateway analyzing the data packets to obtain the circuit tags, and transmitting the data packets to the called ISDN terminal through the plurality of called circuits (4, 5, 6) corresponding to the respective calling circuits (1, 2, 3) according to the circuit tags in the data packets.

2. The data transmission method according to claim 1, wherein the IP link route further comprises a backup IP link route; and
the calling media gateway checks a status of the present IP link route periodically, and transmits the data packets to the called media gateway through the backup IP link route when the present IP link route is found unavailable.

3. A data transmission system comprising a calling media gateway and a called media gateway with data transmitted therebetween through an IP link route, wherein:
the calling media gateway is adapted to:
receive message packets in H.221 format transmitted by a calling ISDN terminal through a plurality of calling circuits (1, 2, 3), convert the message packets Into data packets suitable for being transmitted through a single IP link route by adding circuit tags indicative of a calling circuit to which each message packet belongs to the message packets from the different calling circuits (1, 2, 3), and transmit the data packets containing the circuit tags to the called media gateway through the single IP link route; and
the called media gateway is adapted to:
analyze the data packets to obtain the circuit tags, and transmit the data packets to the called ISDN terminal through the plurality of called circuits (4, 5, 6) corresponding to the respective calling circuits (1, 2, 3) according to the circuit tags in the data packets.

4. The data transmission system according to claim 3, wherein the IP link route further comprises a backup IP link route; and
the calling media gateway checks a status of the present IP link route periodically, and transmits the data packets to the called media gateway through the backup IP link route when the present IP link route is found unavailable.

5. A media gateway for transmitting data through an IP link route to another media gateway, comprising:
a first receiving means adapted to receive message packets in H.221 format transmitted by a calling ISDN terminal through a plurality of calling circuits (1, 2, 3);
a first converting means adapted to convert the message packets into data packets suitable for being transmitted through a single IP link route by adding circuit tags indicative of a calling circuit to which each message packet belongs to the message packets from the different calling circuits (1, 2, 3); and
a first transmitting means adapted to transmit the data packets containing the circuit tags to another media gateway through the single IP link route.

6. The media gateway according to claim 5, further comprising:
a second receiving means adapted to receive data packets containing circuit tags through an IP link route from another media gateway;
a second converting means adapted to analyze the data packets to obtain the circuit tags; and
a second transmitting means adapted to transmit the data packets to the called ISDN terminal through the plurality of called circuits (4, 5, 6) corresponding to the respective calling circuits (1, 2, 3) according to the circuit tags in the data packets.

7. A media gateway for receiving data through an IP link route from another media gateway, wherein comprising:
converting means adapted to analyze data packets received through a single IP link route to obtain circuit tags contained in the data packets; and
transmitting means adapted to transmit the data packets to the called ISDN terminal through the plurality of called circuits (4, 5, 6) corresponding to the respective calling circuits (1, 2, 3) according to the circuit tags in the data packets.

## Patentansprüche

1. Datenübertragungsverfahren zum Übertragen von Daten durch eine IP-Strecken-Route zwischen einem rufenden Media Gateway und einem gerufenen Media Gateway, wobei das Verfahren die folgenden Schritte umfasst:
A. das rufende Media Gateway empfängt Nachrichtenpakete im H.221-Format, die durch ein rufendes ISDN-Endgerät durch mehrere rufende Leitungen (1, 2, 3) übertragen werden, und setzt die Nachrichtenpakete in Datenpakete um, die für die Übertragung durch eine Einzel-IP-Strecken-Route geeignet sind, indem zu den Nachrichtenpaketen von den verschiedenen rufenden Leitungen (1, 2, 3) Leitungs-Tags hinzugefügt werden, die eine rufende Leitung angeben, zu der jedes Nachrichtenpaket gehört;
B. das rufende Media Gateway überträgt die Datenpakete, die die Leitungs-Tags enthalten, durch die Einzel-IP-Strecken-Route zu dem gerufenen Media Gateway; und
C. das gerufene Media Gateway analysiert die Datenpakete, um die Leitungs-Tags zu erhalten, und überträgt die Datenpakete zu dem gerufenen ISDN-Endgerät durch die mehreren gerufenen Leitungen (4, 5, 6), die gemäß den Leitungs-Tags in den Datenpaketen den jeweiligen rufenden Leitungen (1, 2, 3) entsprechen.

2. Datenübertragungsverfahren nach Anspruch 1, wobei die IP-Strecken-Route ferner eine Backup-IP-Strecken-Route umfasst; und
das rufende Media Gateway einen Status der derzeitigen IP-Strecken-Route periodisch prüft und die Datenpakete durch die Backup-IP-Strecken-Route zu dem gerufenen Media Gateway überträgt, wenn sich die derzeitige IP-Strecken-Route als nicht verfügbar erweist.

3. Datenübertragungssystem mit einem rufenden Media Gateway und einem gerufenen Media Gateway, wobei Daten durch eine IP-Strecken-Route zwischen ihnen übertragen werden, wobei
das rufende Media Gateway für Folgendes ausgelegt ist:
Empfangen von Nachrichtenpaketen im H.221-Format, die durch mehrere rufende Leitungen (1, 2, 3) durch ein rufendes ISDN-Endgerät übertragen werden, Umsetzen der Nachrichtenpakete in Datenpakete, die für die Übertragung durch eine Einzel-IP-Strecken-Route geeignet sind, indem zu den Nachrichtenpaketen von den verschiedenen rufenden Leitungen (1, 2, 3) Leitungs-Tags hinzugefügt werden, die eine rufende Leitung angeben, zu der jedes Nachrichtenpaket gehört, und Übertragen der Datenpakete, die die Leitungs-Tags enthalten, durch die Einzel-IP-Strecken-Route zu dem gerufenen Media Gateway; und
das gerufene Media Gateway für Folgendes ausgelegt ist:
Analysieren der Datenpakete, um die Leitungs-Tags zu erhalten, und Übertragen der Datenpakete zu dem gerufenen ISDN-Endgerät durch die mehreren gerufenen Leitungen (4, 5, 6), die gemäß den Leitungs-Tags in den Datenpaketen den jeweiligen rufenden Leitungen (1, 2, 3) entsprechen.

4. Datenübertragungssystem nach Anspruch 3, wobei die IP-Strecken-Route ferner eine Backup-IP-Strecken-Route umfasst; und
das rufende Media Gateway einen Status der derzeitigen IP-Strecken-Route periodisch prüft und die Datenpakete durch die Backup-IP-Strecken-Route zu dem gerufenen Media Gateway überträgt, wenn sich die derzeitige IP-Strecken-Route als nicht verfügbar erweist.

5. Media Gateway zum Übertragen von Daten durch eine IP-Strecken-Route zu einem anderen Media Gateway, umfassend:
ein erstes Empfangsmittel, das dafür ausgelegt ist, Nachrichtenpakete im H.221-Format zu empfangen, die von einem rufenden ISDN-Endgerät durch mehrere rufende Leitungen (1, 2, 3) übertragen werden;
ein erstes Umsetzungsmittel, das dafür ausgelegt ist, die Nachrichtenpakete in Datenpakete umzusetzen, die für die Übertragung durch eine Einzel-IP-Strecken-Route geeignet sind, indem zu den Nachrichtenpaketen von den verschiedenen rufenden Leitungen (1, 2, 3) Leitungs-Tags hinzugefügt werden, die eine rufende Leitung angeben, zu der jedes Nachrichtenpaket gehört; und
ein erstes Übertragungsmittel, das dafür ausgelegt ist, die Datenpakete, die die Leistungs-Tags enthalten, durch die Einzel-IP-Strecken-Route zu einem anderen Media Gateway zu übertragen.

6. Media Gateway nach Anspruch 5, ferner umfassend:
ein zweites Empfangsmittel, das dafür ausgelegt ist, Datenpakete, die Leitungs-Tags enthalten, durch eine IP-Strecken-Route von einem anderen Media Gateway zu empfangen;
ein zweites Umsetzungsmittel, das dafür ausgelegt ist, die Datenpakete zu analysieren, um die Leitungs-Tags zu erhalten; und
ein zweites Übertragungsmittel, das dafür ausgelegt ist, die Datenpakete durch die mehreren gerufenen Leitungen (4, 5, 6), die gemäß den Leitungs-Tags in den Datenpaketen den jeweiligen rufenden Leitungen (1, 2, 3) entsprechen, zu dem gerufenen ISDN-Endgerät zu übertragen.

7. Media Gateway zum Empfangen von Daten durch eine IP-Strecken-Route von einem anderen Media Gateway, umfassend:
Umsetzungsmittel, die dafür ausgelegt sind, durch eine Einzel-IP-Strecken-Route empfangene Datenpakete zu analysieren, um in den Datenpaketen enthaltene Leitungs-Tags zu erhalten; und
Übertragungsmittel, die dafür ausgelegt sind, die Datenpakete durch die mehreren gerufenen Leitungen (4, 5, 6), die gemäß den Leitungs-Tags in den Datenpaketen den jeweiligen rufenden Leitungen (1, 2, 3) entsprechen, zu dem gerufenen ISDN-Endgerät zu übertragen.

## Revendications

1. Procédé de transmission de données pour transmettre des données par le biais d'une route de liaison IP entre une passerelle de média appelante et une passerelle de média appelée, le procédé comprenant les étapes suivantes :
A. réception par la passerelle média appelante de paquets de message de format H.221 transmis par un terminal RNIS appelant par le biais d'une pluralité de circuits appelants (1, 2, 3) et conversion par celle-ci des paquets de message en paquets de données pouvant être transmis par le biais d'une route de liaison IP unique en ajoutant aux paquets de message provenant des différents circuits d'appel (1, 2, 3) des repères de circuit indiquant un circuit appelant auquel chaque paquet de message appartient ;
B. transmission par la passerelle média appelante des paquets de données contenant les repères de circuit à la passerelle de média appelée par le biais de la route de liaison IP unique ; et
C. analyse par la passerelle média appelée des paquets de données pour obtenir les repères de circuit, et transmission par celle-ci des paquets de données au terminal RNIS appelé par le biais de la pluralité de circuits appelés (4, 5, 6) correspondant aux circuits appelants respectifs (1, 2, 3) en fonction des repères de circuit dans les paquets de données.

2. Procédé de transmission de données selon la revendication 1, dans lequel la route de liaison IP comprend en outre une route de liaison IP de secours ; et
la passerelle de média appelante vérifie périodiquement un état de la route de liaison IP courante, et transmet les paquets de données à la passerelle de média appelée par le biais de la route de liaison IP de secours quand la route de liaison IP courante s'avère indisponible.

3. Système de transmission de données comprenant une passerelle de média appelante et une passerelle de média appelée, des données étant transmises entre celles-ci par le biais d'une route de liaison IP, dans lequel :
la passerelle média appelante est adaptée pour :
recevoir des paquets de message de format H.221 transmis par un terminal RNIS appelant par le biais d'une pluralité de circuits appelants (1, 2, 3), convertir des paquets de message en paquets de données pouvant être transmis par le biais d'une route de liaison IP unique en ajoutant aux paquets de message provenant des différents circuits appelants (1, 2, 3) des repères de circuit indiquant un circuit appelant auquel chaque paquet de message appartient, et transmettre les paquets de données contenant les repères de circuit à la passerelle de média appelée par le biais de la route de liaison IP unique ; et
la passerelle média appelée est adaptée pour :
analyser les paquets de données pour obtenir les repères de circuit, et transmettre les paquets de données au terminal RNIS appelé par le biais de la pluralité de circuits appelés (4, 5, 6) correspondant aux circuits appelants respectifs (1, 2, 3) en fonction des repères de circuit dans les paquets de données.

4. Système de transmission de données selon la revendication 3, dans lequel la route de liaison IP comprend en outre une route de liaison IP de secours ; et
la passerelle de média appelante vérifie périodiquement un état de la route de liaison IP courante, et transmet les paquets de données à la passerelle de média appelée par le biais de la route de liaison IP de secours quand la route de liaison IP courante s'avère indisponible.

5. Passerelle de média pour transmettre des données par le biais d'une route de liaison IP à une autre passerelle de média, comprenant :
un premier moyen de réception pour recevoir des paquets de message de format H.221 transmis par un terminal RNIS appelant par le biais d'une pluralité de circuits appelants (1, 2, 3) ;
un premier moyen de conversion adapté pour convertir les paquets de message en paquets de données pouvant être transmis par une route de liaison IP unique en ajoutant aux paquets de message provenant des différents circuits appelants (1, 2, 3) des repères de circuit indiquant un circuit appelant auquel chaque paquet de message appartient ; et
un premier moyen de transmission adapté pour transmettre les paquets de données contenant les repères de circuit à une autre passerelle de média par le biais de la route de liaison IP unique.

6. Passerelle de média selon la revendication 5, comprenant en outre :
un second moyen de réception adapté pour recevoir des paquets de données contenant des repères de circuit depuis une autre passerelle de média par le biais d'une route de liaison IP ;
un second moyen de conversion adapté pour analyser les paquets de données afin d'obtenir les repères de circuit ; et
un second moyen de transmission adapté pour transmettre les paquets de données au terminal RNIS appelé par le biais de la pluralité de circuits appelés (4, 5, 6) correspondant aux circuits appelants respectifs (1, 2, 3) en fonction des repères de circuit dans les paquets de données.

7. Passerelle de média pour recevoir des données par le biais d'une route de liaison IP depuis une autre passerelle de média, comprenant :
des moyens de conversion adaptés pour analyser des paquets de données reçus par le biais d'une route de liaison IP unique afin d'obtenir des repères de circuits obtenus dans les paquets de données ; et
des moyens de transmission adaptés pour transmettre les paquets de données au terminal RNIS appelé par le biais de la pluralité de circuits appelés (4, 5, 6) correspondant aux circuits appelants respectifs (l, 2, 3) en fonction des repères de circuit dans les paquets de données.
